# EUROPÄISCHE PATENTSCHRIFT

(11) **EP 2 830 803 B1**
(45) Veröffentlichungstag und Bekanntmachung des Hinweises auf die Patenterteilung: **23.11.2016**
(21) Anmeldenummer: 13711663.8
(22) Anmeldetag: 20.03.2013
(51) Int. Cl.: B23K 1/00, B23K 1/005, B23K 1/18, F01D 5/02, F01D 5/06

(54) **TURBINENLÄUFER FÜR EINE ABGASTURBINE SOWIE EIN VERFAHREN ZUR HERSTELLUNG DES TURBINENLÄUFERS**
TURBINE ROTOR FOR AN EXHAUST GAS TURBINE AND METHOD FOR PRODUCING THE TURBINE ROTOR
ROTOR DE TURBINE À GAZ D'ÉCHAPPEMENT ET PROCÉDÉ DE FABRICATION DU ROTOR DE TURBINE

(30) Priorität: 29.03.2012 DE 102012205042
(43) Veröffentlichungstag der Anmeldung: 04.02.2015
(73) Patentinhaber: Continental Automotive GmbH, 30165 Hannover (DE)
(72) Erfinder: ALBUZAT, Ulrike, 68309 Mannheim (DE); MÜNCH, Günter, 67316 Carlsberg (DE)
(86) Internationale Anmeldenummer: PCT/EP2013/055829
(87) Internationale Veröffentlichungsnummer: WO 2013/143944

(56) Entgegenhaltungen:
- WO-A2-2010/036425
- DE-A1-102007 048 789
- DE-A1-102009 034 420
- DE-T2- 69 724 730

## Beschreibung

Die vorliegende Erfindung betrifft einen Turbinenläufer, mit einer Wärmedrossel im Übergang von Turbinenlaufrad zur Läuferwelle, für eine Abgasturbine sowie ein Verfahren zur Herstellung des Turbinenläufers

Ein solcher Turbinenläufer besteht aus einem Turbinenrad und einer Läuferwelle als bauliche Einheit und ist zum Beispiel Teil des Laufzeugs eines Abgasturboladers für die Verbrennungsmaschine eines Kraftfahrzeugs. Der Turbinenläufer dient in einem Abgasturbolader zur Umsetzung von im Abgas einer Verbrennungsmaschine enthaltener Abgasenergie in Rotationsenergie des Laufzeugs und zur Übertragung dieser Rotationsenergie auf ein mit dem Turbinenläufer verbundenes Verdichterrad. Mit Hilfe des Verdichterrads wiederum wird die Rotationsenergie zur Erzeugung eines erhöhten Druckes der Luftzufuhr der Verbrennungsmaschine genutzt und dient somit zur Steigerung der Leistung und Effizienz der Verbrennungsmaschine.

Stattdessen kann beispielsweise auch ein Generator mit dem Turbinenläufer gekoppelt sein, mit dessen Hilfe die Rotationsenergie in elektrische Energie gewandelt wird, die wiederum vielseitig genutzt werden kann.

Der derzeitige Hauptanwendungsbereich betrifft jedoch Abgasturbolader für Verbrennungsmotoren in Kraftfahrzeugen, weshalb im Weiteren in der Beschreibung auf Abgasturbolader Bezug genommen wird sofern zum besseren Verständnis nützlich.

Abgasturbolader werden vermehrt zur Leistungssteigerung bei Kraftfahrzeug-Verbrennungsmotoren eingesetzt. Dies geschieht immer häufiger mit dem Ziel den Verbrennungsmotor bei gleicher oder gar gesteigerter Leistung in Baugröße und Gewicht zu reduzieren und gleichzeitig den Verbrauch und somit den CO₂-Ausstoß, im Hinblick auf immer strenger werdende gesetzliche Vorgaben diesbezüglich, zu verringern. Das Wirkprinzip besteht darin, die im Abgasstrom enthaltene Energie zu nutzen um den Druck im Ansaugtrakt des Verbrennungsmotors zu erhöhen und so eine bessere Befüllung des Brennraumes mit Luft-Sauerstoff zu bewirken und somit mehr Treibstoff, Benzin oder Diesel, pro Verbrennungsvorgang umsetzen zu können, also die Leistung des Verbrennungsmotors zu erhöhen.

Ein Abgasturbolader weist dazu eine im Abgasstrang des Verbrennungsmotors angeordnete Turbine mit einem durch den Abgasstrom angetriebenen Turbinenläufer und einen im Ansaugtrakt angeordneten Verdichter mit einem den Druck aufbauenden Verdichterlaufrad auf. Das Turbinenlaufrad und die Läuferwelle sind stoffschlüssig mit einander verbunden und bilden so eine bauliche Einheit. Das Verdichterlaufrad ist drehfest an dem, dem Turbinenlaufrad gegenüberliegenden Ende der Läuferwelle des Turbinenläufers befestigt, wobei die Läuferwelle in einer zwischen Turbine und Verdichter angeordneten Lagereinheit drehgelagert ist. Somit wird mit Hilfe des Abgasmassenstroms der Turbinenläufer und über die Läuferwelle wiederum das Verdichterlaufrad angetrieben und die Abgasenergie so zum Druckaufbau im Ansaugtrakt genutzt.

Das Turbinenrad befindet sich im Betrieb im heißen Abgasstrom und ist somit sehr großen Temperaturschwankungen ausgesetzt wobei Spitzentemperaturen bis über 1000°C erreicht werden. Gleichzeitig rotiert der Turbinenläufer mit sehr hohen Drehzahlen von bis zu 300.000 U/min wodurch das Turbinenlaufrad und insbesondere die Turbinenradbeschaufelung sehr hohen mechanischen Beanspruchungen durch die auftretenden hohen Fliehkräfte ausgesetzt ist. Weiterhin ist insbesondere die Masse des Turbinenrades von großer Bedeutung für das dynamische Ansprechverhalten der Turbine, was einer den hohen Belastungen entsprechenden massiven Auslegung des Turbinenlaufrades entgegen steht.

Bei den Turbinenlaufrädern werden deshalb hochwarmfeste Metallegierungen eingesetzt um ein frühzeitiges Versagen im Betrieb zu vermeiden. Vermehrt werden dazu Titan-Aluminim-Legierungen (TiAl-Legierungen oder Titanaluminid) oder Nickel-Basislegierungen (Ni-Legierungen)eingesetzt, die sich insbesondere durch ihre hohe spezifische Festigkeit bei hoher Temperatur und ein gleichwohl niedriges spezifisches Gewicht auszeichnen. Darüber hinaus kommt der Wärmeausdehnungskoeffizient dieser hochwarmfesten Metalllegierungen dem von üblicherweise im Turbinenbau verwendeten Metallen sehr nahe, was Probleme aufgrund unterschiedlicher Wärmeausdehnung zu vermeiden hilft. Praktisch eingesetzt werden intermetallische Gemische mit einem Haupanteil an Titan und Aluminium oder Nickel. Wie beispielsweise auch aus der DE 10 2007 048 789 A1 bekannt ist, können die konkreten Legierungszusammensetzungen durchaus variieren und auch weitere Bestandteile enthalten und sind typischerweise gekennzeichnet durch einen Titananteil zwischen von 50 und 60% (Gewichtsanteil)und einem Aluminiumanteil >25% (Gewichtsanteil). Weitere Bestandteile können beispielsweise Cr, Nb, B, C oder Mo sein. TiAl-Legierungen bilden eine sogenannte γ-TiAl-Phase (Gamma-Titanaluminid) mit tetragonaler Kristallstruktur und werden je nach Anteil an weiteren unterschiedlichen Phasen als Gamma-, Duplex- oder Lammellare Legierungen bezeichnet.
Bei den Ni-Basislegierungen handelt es sich beispielsweise um Inco 713 C, Inco 713 LC, MAR-M 246, MAR-M 247, B 1964, IN 100 oder GMR-235.
In den folgenden Ausführungen werden all diese Legierungsgefüge übergreifend unter dem Begriff "hochwarmfeste Metallegierungen" zusammengefasst.

Die Läuferwelle andererseits ist ein Teil des Lagerungssystems des Turbinenläufers und muss eine hohe Wechselbiegelast aufnehmen können und muss zumindest im Lagerungsbereich über eine ausreichend gehärtete Außenschicht verfügen, um ein Festfressen der Lager zu vermeiden. Andererseits ist die Läuferwellen nicht den extrem hohen Temperaturen ausgesetzt wie das Turbinenlaufrad.

Für diesen Einsatz eignen sich dem entsprechend Werkstoffe wie Stahl, insbesondere Baustahl, niedrig- oder hochlegierter Vergütungsstahl, wie zum Beispiel 42CrMo4(1.7225), X22CrMoV12-1(1.4923)oder X19CrMoNbVN11-1(1.4913) oder auch Superlegierungen wie Inconel oder Incoloy (siehe auch DE 10 2007 048 789 A1). Diese Materialien werden in den folgenden Ausführungen einfach und übergreifend als Stahl bezeichnet.

Um die jeweiligen Vorteile der entsprechenden Materialien nutzen zu können werden die Turbinenläufer also aus den oben genannten Komponenten, Turbinenlaufrad aus hochwarmfester Metalllegierung und Läuferwelle aus Stahl, gefertigt und müssen in der Folge vorteilhaft mittels einer stoffschlüssigen Verbindung zu einer Baueinheit zusammengefügt werden.

Bei stoffschlüssigen Verbindungen werden die Verbindungspartner mittels atomarer oder molekularer Kräfte zusammengehalten und sind nicht lösbare Verbindungen, die sich nur zerstörend wieder lösen lassen. Stoffschlüssige Verbindungen sind in diesem Zusammenhang insbesondere Schweißverbindungen und Lötverbindungen.

Wie zum Beispiel aus der DE 697 24 730 T2 bekannt, kann das in diesem Zusammenhang in Verbindung mit anderen Materialkombinationen bekannte Reibschweißverfahren nur beschränkt eingesetzt werden. Der Grund dafür ist, dass, wenn ein Reibschweißverfahren eingesetzt wird, die Transformation des Baustahls zur Zeit der Abkühlung vom Austenit zum Martensit eine Ausdehnung des Stahles verursacht, was eine Restspannung bewirkt, und auch wenn das TiAl eine hohe Steifigkeit besitzt, liegt die Formbarkeit bei Raumtemperatur ungefähr bei geringen 1% und deshalb kann ein Brechen der Räder aus TiAl auftreten. Des Weiteren tritt eine Reaktion von TiAl mit dem Kohlenstoff, C, in dem Baustahl auf wodurch Titancarbid an der Verbindungsschnittstelle gebildet wird, wodurch die Festigkeit an der Schnittstelle in kritischem Maße sinkt.

Zur Vermeidung dieser Problematik wird in der DE 697 24 730 T2 ein Lötverfahren vorgeschlagen, bei dem zwischen den beiden Verbindungspartnern Turbinenlaufrad und Läuferwelle ein Lotmaterial, das zum Beispiel ein austenitisches Gefüge aufweist eingefügt wird. Auch in der WO 2008 039216 A2 wird ein solches Lötverfahren offenbart.

Löten ist, gemäß DIN 8505 "Löten", ein thermisches Verfahren zum stoffschlüssigen Fügen von Werkstoffen, wobei eine flüssige Phase durch Schmelzen eines Lotes und eine Verbindung durch Diffusion des Lotes an den Grenzflächen entsteht. Ein weiterer wesentlicher Unterschied zum Schweißen besteht darin, dass die Solidustemperatur der Grundwerkstoffe der Verbindungspartner dabei nicht erreicht wird.
Somit findet dieser Prozess bei niedrigeren Temperaturen statt als das Schweißen und es werden weniger Eigenspannungen in der Fügestelle erzeugt. Desweiteren kann durch die Verwendung eines entsprechenden Lotes als Zwischenmaterial zwischen den Verbindungspartnern die Ausbildung von für die Festigkeit schädlichen Gefügestrukturen verhindert werden. Als Lotmaterialien werden gemäß DE 697 24 730 T2 vorteilhaft hauptsächlich auf Nickel, Kupfer, Silber oder Titan basierte Metalllegierungen eingesetzt.

Weiterhin ist auch aus dem Dokument DE 10 2009 034 420 A1 eine Vorrichtung zum Fügen eines Turbinenrades mit einer Welle eines Abgasturboladers bekannt, wobei das Turbinenrad aus einer Keramiklegierung und die Welle aus Stahl besteht und die beiden Bauteile durch Löten stoffschlüssig verbunden sind. Dabei sind die beiden Bauteile beim Fügen in radialer Richtung durch koaxial ausgerichtete, formschlüssig ineinander greifende Mittel zueinander zentriert.

Ein weiteres Verfahren zur Herstellung eines Rotors eines Abgasturboladers und ein entsprechender Rotor sind aus dem Dokument WO 2010 036 425 A2 bekannt. Dabei wird eine Rotorwelle mit einem Rotorrad über ein Zwischenstück verbunden, wobei das Zwischenstücks einen Außendurchmesser aufweist, der größer ist als der Durchmesser der Rotorwelle und mit dem Rotorrad zum Beispiel mit Hilfe von Hochtemperaturlöten in einem Ofen unter einem Vakuum oder Löten mit Hilfe des Erhitzens durch einen Elektronen- oder Laserstrahl verbunden wird.

Eine spezielle Problematik beim Einsatz solcher Turbinenläufer besteht darin, dass Wärme von dem in der heißen Abgasumgebung laufenden Turbinenlaufrad durch Wärmeleitung über die Verbindungsstelle hinweg auf die Läuferwelle übertragen wird, deren Material nicht für die gleichen hohen Temperaturen ausgelegt ist. Auch die übermäßige Erwärmung der lagernahen Bereiche der Läuferwelle ist zu vermeiden, da dies die Laufeigenschaften der Lager negativ beeinflussen kann.

Um den Wärmeübergang vom Turbinenlaufrad auf die Läuferwelle zu begrenzen ist aus dem Stand der Technik, zum Beispiel EP 1 507 062 B1 die Anordnung von Hohlräumen im Material zwischen Turbinenlaufrad und Läuferwelle bekannt. Im Bereich des Hohlraumes oder der Hohlräume ist der wärmeleitende Materialquerschnitt reduziert, was bezüglich der Wärmeleitung als Drosselstelle wirkt. Üblicherweise werden diese Hohlräume erzeugt indem in einer der zu verbindenden Stirnflächen der Turbinenlaufradnabe oder der Läuferwelle eine Ausnehmung, zum Beispiel in Form einer Sacklochbohrung, eingebracht wird. Dies reduziert jedoch wiederum die tragende Verbindungsfläche der Lötverbindung zwischen Turbinenlaufradnabe und Läuferwelle und schwächt die mechanische Belastbarkeit des Turbinenläufers in diesem Bereich.

Eine weitere Problematik besteht darin, dass auch bei den niedrigeren Löttemperaturen die Austenittemperatur des für die Läuferwelle eingesetzten Stahls überschritten wird und dadurch eine Enthärtung des Stahls stattfindet. Diese Problematik ist umso gravierender desto breiter sich der Erwärmungsbereich um die Lötverbindung herum, ggf. bis in die Lagerbereiche der Läuferwelle hinein ausdehnt. Dies ist vor allem der Fall bei den üblicherweise eingesetzten Verfahren zur Erwärmung mittels Brennern, Induktionsspulen oder gar Heizöfen. Eine erneute nachträgliche, kosten- und zeitintensive Nachbearbeitung sowie Härtung der Läuferwelle wird dadurch unumgänglich. Dies ist vor Allem für eine industrielle Großserien-Fertigung von Nachteil.

Der vorliegenden Erfindung liegt daher die Aufgabe zugrunde, einen Turbinenläufer, bestehend aus einem hoch warmfesten Turbinenlaufrad und einer Stahl-Läuferwelle, für eine Abgasturbine anzugeben, bei der die Wärmeleitung zwischen Turbinenlaufrad und Läuferwelle reduziert ist, jedoch gleichwohl eine hohe mechanische Belastbarkeit der Verbindung zwischen Turbinenlaufrad und Läuferwelle gegeben ist, ohne dass eine aufwendige Nachbearbeitung, zum Beispiel Härten, des Turbinenläufers erforderlich ist.

Weiterhin besteht die Aufgabe darin ein Verfahren zur Herstellung eines solchen Turbinenläufers anzugeben das kostengünstig industriell, in der Großserienfertigung einsetzbar ist.

Diese Aufgabe wird durch einen Turbinenläufer mit den Merkmalen gemäß Patentanspruch 1 sowie durch ein Verfahren zur Herstellung dieses Turbinenläufers mit den Merkmalen gemäß Patentanspruch 11 gelöst. Vorteilhafte Aus- und Weiterbildungen, welche einzeln oder, sofern es sich nicht um sich gegenseitig ausschließende Alternativen handelt, in Kombination miteinander eingesetzt werden können, sind Gegenstand der abhängigen Ansprüche.

Der erfindungsgemäße Turbinenläufer für eine Abgasturbine weist ein Turbinenlaufrad mit einer Laufradnabe und eine Läuferwelle mit einem der Laufradbasis zugewandten Läuferwellenende auf. Das Turbinenlaufrad besteht aus einer hochwarmfesten Metalllegierung und ist vorzugsweise in einem gebräuchlichen Feingussverfahren hergestellt. Es weist einen Grundkörper mit einer Beschaufelung auf der Vorderseite, sowie eine Laufradnabe in Form eines konzentrisch auf der Rückseite des Grundkörpers angeordneten Zylinderabschnittes auf.

Die Läuferwelle besteht aus Stahl und ist vorzugsweise für den späteren Einsatz fertig bearbeitet und zumindest im Bereich der späteren Lagerstellen gehärtet.

Die Laufradnabe und das Läuferwellenende sind mittels einer Lötverbindung stoffschlüssig mit einander verbunden.

Als Lotmaterialien werden vorteilhaft hauptsächlich auf Nickel, Kupfer, Silber oder Titan basierte Metalllegierungen eingesetzt. Der erfindungsgemäße Turbinenläufer zeichnet sich weiterhin dadurch aus, dass das Läuferwellenende oder die Laufradnabe oder auch sowohl Läuferwellenende und die Laufradnabe jeweils eine zentrisch angeordnete Ausnehmung aufweisen, die im Übergang zwischen Turbinenlaufrad und Läuferwelle als Wärmedrossel wirkt. Gekennzeichnet ist der erfindungsgemäße Turbinenläufer dadurch, dass in der jeweiligen Ausnehmung ein Verschlussstopfen derart angeordnet ist, dass er mit der Ausnehmung einen geschlossenen Hohlraum bildet und die Ausnehmung zur jeweiligen Stirnfläche hin abschließt. Dazu ist der Verschlussstopfen vorzugsweise so ausgebildet, dass er der Kontur der Ausnehmung angepasst ist, jedoch gleichwohl ein ausreichender Spalt zwischen der Wand der Ausnehmung und der Verschlussstopfen Außenkontur gebildet ist, in den während des Lötprozesses Lotmaterial eindringen kann, um die Verbindung herzustellen.
Die Lötverbindung ist zwischen den Stirnflächen von Laufradnabe und Läuferwelle und zwischen Verschlussstopfen und Laufradnabe sowie Läuferwelle ausgebildet. Mit anderen Worten besteht die Lötverbindung sowohl zwischen den sich gegenüber liegenden Stirnflächen von Läuferwellenende und Laufradnabe als auch zwischen der Außen-Mantelfläche des Stopfens und der Innenfläche der jeweiligen Ausnehmung im Überlappungsbereich der beiden genannten Flächen als auch gegebenenfalls zwischen der die jeweilige Stirnfläche ergänzenden Verschlussstopfen-Stirnfläche und der jeweils gegenüberliegenden Stirnfläche von Läuferwellenende oder Laufradnabe.

Die Vorteile des erfindungsgemäßen Turbinenläufers liegen vor allem darin, dass zum Einen eine verminderte Wärmeleitung zwischen Turbinenlaufrad und Läuferwelle gewährleistet ist und zum Anderen die Festigkeit der Verbindung durch die mittels des Verschlussstopfens vergrößerte Verbindungsfläche maßgeblich erhöht und somit eine hohe mechanische Belastbarkeit der Verbindung zwischen Turbinenlaufrad und Läuferwelle gegeben ist.

Eine vorteilhafte Ausführung des erfindungsgemäßen Turbinenläufers ist dadurch gekennzeichnet, dass die hochwarmfeste Metalllegierung des Turbinenlaufrads eine TiAl-Legierung oder eine Ni-Basislegierung ist und dass der Stahl der Läuferwelle ein niedriglegierter oder hochlegierter Vergütungsstahl oder ein austenitischer Stahl ist. Dies hat den Vorteil, dass aus einer großen Vielzahl bekannter Materialien die optimale Kombination zur Erzielung der geforderten Eigenschaften zusammengestellt werden kann.

Eine weitere vorteilhafte Ausführung des erfindungsgemäßen Turbinenläufers ist dadurch gekennzeichnet, dass die Lötverbindung mittels Elektronenstrahl-Lötverfahren erzeugt wurde. Dies ermöglicht eine gezielte Steuerung des Lötprozesses, wobei durch den räumlich begrenzten Wärmeeintrag, die Härtung der Läuferwelle im Bereich der Lagerstellen nicht beeinträchtigt wird und ein zusätzlicher Härteprozess entfallen kann. Dies sind wesentliche Voraussetzungen für den Einsatz des erfindungsgemäßen Turbinenläufers in Großserienprodukten, wie zum Beispiel in Turboladern für Verbrennungsmotoren in Kraftfahrzeugen.

Eine weitere vorteilhafte Ausführung des erfindungsgemäßen Turbinenläufers ist dadurch gekennzeichnet, dass der Verschlussstopfen auf zumindest einer dem jeweiligen Hohlraum zugewandten Seite eine Ausnehmung aufweist, wodurch der jeweilige Hohlraum vergrößert ist. Dies hat den Vorteil, dass der die Wärmedrossel bildende Hohlraum durch Einbringen des Verschlussstopfens nicht unangemessen verringert und die Drosselwirkung dadurch beeinträchtigt wird, aber dennoch eine ausreichend große Überlappungsfläche zwischen der Außenmantelfläche des Verschlussstopfens und der Innenwand der Ausnehmung zur Ausbildung einer vergrößerten Verbindungsfläche zur Verfügung steht.

In vorteilhafter Weiterbildung des erfindungsgemäßen Turbinenläufers ist der Verschlussstopfen zylinderförmig ausgebildet und weist auf seiner Außenmantelfläche riefen-, nut- oder rändelförmige Vertiefungen mit zumindest anteilmäßig axialem Verlauf auf. Die Vertiefungen erstrecken sich dabei vorzugsweise über die gesamte axiale Länge des Verschlussstopfens. Die so entstehende Profilierung der Außenmantelfläche kann einen mehr oder weniger großen Negativanteil aufweisen, der einen entsprechenden Lötspalt zwischen Außenmantelfläche und Innenwand der jeweiligen Ausnehmung ausbildet. Vorzugsweise wird auf diese Weise eine Lötspaltbreite zwischen 0,05 mm und 0,15 mm eingestellt, bei der die Verbindung die besten Festigkeitswerte erzielt. Vorzugsweise ist der Verschlussstopfen aus dem gleichen Material gefertigt wie das Turbinenlaufrad oder die Läuferwelle, was die Auswahl des Lotmaterials erleichtert.
Ein so gestalteter Verschlussstopfen hat den Vorteil, dass er einfach und kostengünstig zum Beispiel aus einem Stangenmaterial hergestellt werden kann. Durch die vorgesehenen Vertiefungen ist, auch wenn der Verschlussstopfen mit einem leichten Presssitz in die jeweilige Ausnehmung eingefügt ist, gewährleistet, dass ein ausreichend breiter Lötspalt ausgebildet ist, in den Lotmaterial zwischen Außenmantelfläche des Verschlussstopfens und Innenwand der Ausnehmung eindringen kann, um die Verbindung auszubilden. Prinzipiell kann auch auf die Vertiefungen verzichtet werden, dann ist jedoch auf andere Weise sicher zu stellen, dass ein ausreichender Lötspalt gegeben ist.

Die Ausbildung der jeweiligen zentrisch angeordnete Ausnehmung, im Läuferwellenende oder in der Laufradnabe oder sowohl im Läuferwellenende als auch in der Laufradnabe, als Sacklochbohrung stellt eine weitere vorteilhafte Ausführung des erfindungsgemäßen Turbinenläufers dar. Eine Ausnehmung in Form eines Sackloches ist einfach und mit der erforderlichen Genauigkeit in einem Arbeitsgang herzustellen und ermöglicht darüber hinaus die Verwendung eines ebenso einfach herzustellenden zylinderförmigen Verschlussstopfens.

In Weiterbildung der vorgenannten Ausführung der jeweiligen Ausnehmung als Sacklochbohrung kann vorgesehen sein, dass die jeweilige Sacklochbohrung einen Absatz aufweist, der diese zur jeweiligen Stirnfläche hin erweitert und der als Anschlag für den jeweiligen Verschlussstopfen wirkt. Mit anderen Worten handelt es sich hierbei um eine zweistufige Sacklochbohrung die von der Stirnfläche ausgehend bis zu einer bestimmten Tiefe, sprich bis zu dem vorgesehenen Absatz, einen bestimmten (größeren) Durchmesser aufweist und ab dieser Tiefe einen kleineren Durchmesser aufweist. Dabei ist der Absatz vorzugsweise rechtwinklig ausgebildet, so dass er eine ebene Anschlagfläche für den Verschlussstopfen bieten kann. Eine so gestaltete Ausnehmung kann zum Beispiel mit einem Stufenfräser ebenfalls in einem Arbeitsgang hergestellt werden. Ein dem größeren Durchmesser angepasster Verschlussstopfen kann so einfach bis zum Anschlag eingefügt werden und hat einen vorgegebene Position. In vorteilhafter Weise ist der Verschlussstopfen derart in der jeweiligen Ausnehmung angeordnet, dass er mit der jeweiligen Stirnseite eine ebene Fläche bildet. So entsteht eine ebene Verbindungsfläche über den gesamten Durchmesser der Stirnflächen zwischen Turbinenradnabe und Läuferwellenende. Gleichwohl dringt Lot auch in den axial verlaufenden Ringspalt zwischen Außenmantelfläche des Veschlusstopfens und Innenwand der jeweiligen Ausnehmung in der Laufradnabe oder dem Läuferwellenende ein und bildet dort eine Lötverbindung aus. Die so erzielte Vergrößerung der Verbindungsfläche erhöht die Stabilität des Turbinenläufers insgesamt.

Alternativ zu der vorgenannten Ausführung des Turbinenläufers ist eine weitere Ausführung dadurch gekennzeichnet, dass sowohl die Laufradnabe als auch das Läuferwellenende eine zentrisch angeordnete Ausnehmung aufweisen und ein gemeinsamer Verschlussstopfen derart angeordnet ist, dass er in beide Ausnehmungen hineinragt und beide Ausnehmungen zur jeweiligen Stirnfläche hin abschließt. Dadurch werden zwei Hohlräume hinter einander dargestellt und die Drosselwirkung bezüglich des Wärmetransportes weiter erhöht. Darüber hinaus ergibt sich durch die zentrische Anordnung der Ausnehmungen bei entsprechend angepasster Außenkontur des Verschlussstopfens eine positionsbestimmende und gegebenenfalls zentrierende Wirkung der beiden Werkstücke Turbinenlaufrad und Läuferwelle zu einander. Gleichwohl dringt Lot auch in den axial verlaufenden Ringspalt zwischen Außenmantelfläche des Verschlussstopfens und Innenwand der beiden Ausnehmung in der Laufradnabe und dem Läuferwellenende ein und bildet dort eine Lötverbindung aus, welche die Verbindungsfläche insgesamt vergrößert und die bereits genannte Wirkung erzielt.

Eine weitere vorteilhafte Ausführung des Turbinenläufers ist dadurch gekennzeichnet, dass sowohl die Laufradnabe als auch das Läuferwellenende eine zentrisch angeordnete Ausnehmung in Form einer Sacklochbohrung aufweisen und dass diese jeweils einen Absatz mit einer bestimmten axialen Erstreckung aufweisen, wobei der Absatz die jeweilige Sacklochbohrung zur jeweiligen Stirnfläche hin erweitert und dieser als Anschlag für den Verschlussstopfen wirkt. Weiterhin ist ein gemeinsamer Verschlussstopfen mit einer bestimmten axialen Erstreckung derart angeordnet, dass er in beiden Ausnehmungen auf dem jeweiligen Absatz anschlägt. Die axialen Erstreckungen der Ausnehmungen ausgehend von der jeweiligen Stirnfläche bis zum entsprechenden Absatz und die axiale Erstreckung des Verschlussstopfens sind im Verhältnis so dimensioniert, dass zwischen den Stirnflächen von Laufradnabe und Läuferwelle ein Lötspalt mit definierter Spaltbreite ausgebildet ist. Anders ausgedrückt dient der Verschlussstopfen, im Zusammenwirken mit den Anschlägen in den beiden Ausnehmungen der sich gegenüberliegenden Stirnflächen, als Abstandshalter zwischen den beiden Stirnflächen, wobei durch entsprechende Festlegung der axialen Tiefe der erweiterten Sacklochbohrungen bis zum jeweiligen Absatz und der axialen Länge des Verschlussstopfens eine optimale Lötspaltbreite eingestellt werden kann. Vorzugsweise wird auf diese Weise eine Lötspaltbreite zwischen 0,05 mm und 0,15 mm eingestellt. Neben den bereits zur vorgenannten Ausführung genannten Vorteilen weisen bei Lötspaltbreiten innerhalb des genannten Bereichs die Verbindungsstellen zwischen Turbinenlaufrad und Läuferwelle die besten Festigkeitswerte auf.

Die Merkmale aller vorgenannten Ausführungen können selbstverständlich einzeln als auch in beliebiger Kombination miteinander verwirklicht werden, sofern sie sich nicht als Alternativen gegenseitig ausschließen.

Das erfindungsgemäße Verfahren zur Herstellung des zuvor beschriebenen Turbinenläufers ist gekennzeichnet durch die folgenden Verfahrensschritte:
- Zunächst werden ein Turbinenlaufrad aus einer hochwarmfesten Metalllegierung mit einer Laufradnabe, eine Läuferwelle aus Stahl und ein Verschlussstopfen bereitgestellt. Das Turbinenlaufrad ist vorzugsweise in einem gebräuchlichen Feingussverfahren hergestellt und weist einen Grundkörper mit einer Beschaufelung auf der Vorderseite, sowie eine Laufradnabe in Form eines konzentrisch auf der Rückseite des Grundkörpers angeordneten Zylinderabschnittes auf.
- Dann erfolgt das Einbringen einer zentrisch angeordneten Ausnehmung in das Läuferwellenende oder die Laufradnabe oder sowohl in das Läuferwellenende als auch in die Laufradnabe.
- Im Weiteren erfolgt das Einfügen des Verschlussstopfens in die Ausnehmung des Läuferwellenendes oder der Laufradnabe.
- Im Anschluss an den vorausgehenden Schritt wird dann ein Lotmaterial auf eine der Stirnflächen der Laufradnabe oder der Läuferwelle und im Bereich des Verschlussstopfens aufgebracht, wobei vorteilhaft auf Nickel, Kupfer, Silber oder Titan basierende Metalllegierungen eingesetzt werden.
   - Dann werden die beiden Werkstücke, Turbinenlaufrad und Läuferwelle, zusammengeführt und zu einander zentriert ausgerichtet. Dies erfolgt durch Aufspannen der Werkstücke in einer dafür eingerichteten Vorrichtung, derart, dass die stirnseitige Anlagefläche unmittelbar an der gegenüberliegenden Stirnseite des jeweils anderen Werkstückes anliegt und das Lotmaterial im Lötspalt positioniert ist.
- Sodann erfolgt die Erwärmung des Lotmaterials und des unmittelbaren Stirnflächenbereichs von Laufradnabe und Läuferwelle im Lötspalt mit Hilfe eines Elektronenstrahls, bis auf eine vorbestimmte, über der Schmelztemperatur des Lotmaterials liegende Löttemperatur.
- Nach Erreichen der Löttemperatur wird diese, mittels geregelter Energiezufuhr durch den Elektronenstrahl, über eine vorbestimmte Zeit möglichst konstant gehalten. Dies ermöglicht das Benetzen der Verbindungsflächen durch das Lot und verbessert somit den Diffusionsvorgang des Lotes in die sich gegenüberliegenden Verbindungsflächen.
Eine Möglichkeit der Durchführung des Erwärmungs- und Temperaturhaltevorgangs besteht zum Beispiel darin, dass der Elektronenstrahl punktförmig auf einen Abschnitt des Lötspalts fokussiert wird und der Turbinenläufer, also Turbinenlaufrad und Läuferwelle zusammen, in vorbestimmter Drehgeschwindigkeit um seine Drehachse gedreht wird.
- Durch das anschließende Abkühlen der Werkstücke erstarrt die Lotschmelze, wodurch die Lötverbindung zwischen Turbinenlaufrad und Läuferwelle erzeugt wird.
- Nach Verfestigung der Lötstelle kann die Freigabe des Turbinenläufers aus der Vorrichtung erfolgen.

Die Vorteile des erfindungsgemäßen Verfahrens zur Herstellung des erfindungsgemäßen Turbinenläufers liegen vor allem darin, dass in jedem Fall eine Lötverbindung mit konstanter Qualität, und erhöhter Festigkeit der Verbindung zwischen Turbinenlaufrad und Läuferwelle erzielt werden kann. Durch die schnelle und räumlich begrenzte Wärmeeinbringung können kurze Prozesszeiten erzielt werden und es wird kein nachträglicher Härtevorgang der Läuferwelle erforderlich. Dies sind wesentliche Voraussetzungen für den Einsatz des erfindungsgemäßen Verfahrens in der Großserienproduktion, wie zum Beispiel in Turboladern für Verbrennungsmotoren in Kraftfahrzeugen.

In Kürze noch einmal zusammengefasst betrifft die Erfindung einen Turbinenläufer für eine Abgasturbine sowie ein Verfahren zur Herstellung eines solchen Turbinenläufers, wobei der Turbinenläufer ein Turbinenlaufrad aus einer hochwarmfesten Metalllegierung und eine Läuferwelle aus Stahl aufweist und die Laufradnabe und das Läuferwellenende mittels einer Lötverbindung stoffschlüssig mit einander verbunden sind.
Das Läuferwellenende oder/und die Laufradnabe weisen eine zentrisch angeordnete Ausnehmung auf, die als Wärmedrossel wirkt, wobei in der jeweiligen Ausnehmung ein Verschlussstopfen derart angeordnet ist, dass er mit der Ausnehmung einen geschlossenen Hohlraum bildet und die Ausnehmung zur jeweiligen Stirnfläche hin abschließt und die Lötverbindung zwischen den Stirnflächen von Laufradnabe und Läuferwelle und zwischen Verschlussstopfen und Laufradnabe sowie Läuferwelle ausgebildet ist.

Konkrete Ausführungsbeispiele der Erfindung werden im Folgenden anhand der Darstellungen in der Zeichnung näher erläutert.

Es zeigen:
- Fig. 1: eine vereinfachte schematische, nicht maßstäbliche Darstellung einer Ausführungsform des erfindungsgemäßen Turbinenläufers mit einer durch einen Verschlussstopfen verschlossenen Wärmedrossel-Bohrung im Läuferwellenende.
- Fig. 2: vereinfachte schematische, nicht maßstäbliche Darstellung einer weiteren Ausführungsform des erfindungsgemäßen Turbinenläufers mit je einer durch einen gemeinsamen Verschlussstopfen verschlossenen Wärmedrossel-Bohrung im Läuferwellenende und Turbinenradnabe.
- Fig. 3: eine Darstellung einer weiteren Ausführungsform des erfindungsgemäßen Turbinenläufers, wie in Figur 1, jedoch mit einer Ausnehmung im Verschlussstopfen und einem Anschlag-Absatz in der Wärmedrosselbohrung.
- Fig. 4: eine Darstellung einer weiteren Ausführungsform des erfindungsgemäßen Turbinenläufers, wie in Figur 2, jedoch mit je einem Anschlag-Absatz in der jeweiligen Wärmedrosselbohrung und definierter Spaltbreite des Lötspalts.
- Fig. 5: eine Darstellung einer weiteren Ausführungsform des erfindungsgemäßen Turbinenläufers, wie in Figur 4, jedoch mit je einer Ausnehmung auf beiden Stirnseiten des Verschlussstopfens.
- Fig. 6: eine vereinfachte, nicht maßstäbliche Darstellung eines Verschlussstopfens gemäß Figur 5, mit rändelförmigen Vertiefungen auf der Außenmantelfläche.
- Fig. 7: eine Draufsicht auf die Stirnfläche eines Läferwellenendes mit Wärmedrosselbohrung und eingepresstem Verschlussstopfen.
- Fig. 8: eine stark vereinfachte Darstellung einer Vorrichtung zur Durchführung zumindest eines Teils des erfindungsgemäßen Verfahrens.

Funktions- und Benennungsgleiche Gegenstände sind in den Figuren mit denselben Bezugszeichen gekennzeichnet.

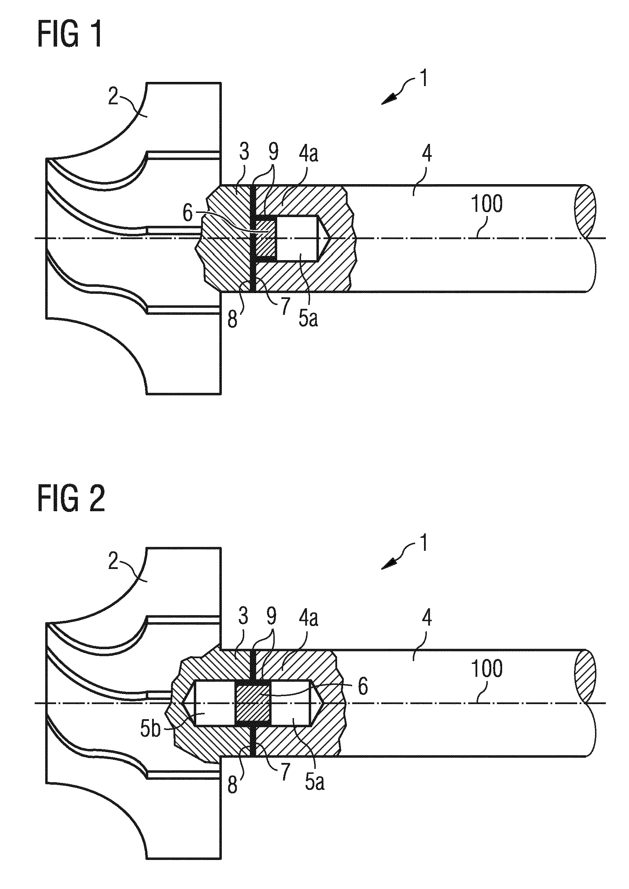

In Figur 1 ist ein erfindungsgemäßer Turbinenläufer 1 in vereinfachter Darstellung gezeigt. Dieser weist ein Turbinenlaufrad 2 mit einer Laufradnabe 3 und eine Läuferwelle 4 auf. Das Turbinenlaufrad ist vorzugsweise in einem gebräuchlichen Feingussverfahren aus einer TiAl-Legierung hergestellt und weist einen Grundkörper mit einer Beschaufelung auf der Vorderseite (in der Figur links), sowie eine Laufradnabe 3 in Form eines konzentrisch auf der Rückseite (in der Figur rechts) des Grundkörpers angeordneten Zylinderabschnittes auf. Die Läuferwelle 4 ist hier ebenfalls vereinfacht dargestellt und kann im konkreten Fall Stufen, Absätze, Verjüngungen und ähnlich Merkmale aufweisen.
Die Verbindungsstelle zwischen Turbinenlaufrad 2 und Läuferwelle 4 ist in "aufgebrochener" Darstellung gezeigt. In dem der Laufradnabe 3 zugewandten Ende der Läuferwelle 4, ist eine Ausnehmung in Form einer Sacklochbohrung 5a, die sich entlang der Turbinenläufer-Drehachse 100 erstreckt, eingebracht. Die Sacklochbohrung 5a ist mit einem zylinderförmigen Verschlussstopfen 6 zur Stirnfläche 7 des Läuferwellenendes 4a hin verschlossen. Der Verschlussstopfen 6 ist dabei genau so weit in die Sacklochbohrung 5a eingebracht, dass die Stirnfläche 7 des Läuferwellenendes 4a mit der außen liegenden Stirnfläche des Verschlussstopfens eine ebene Fläche bildet. Die Lötverbindung ist zwischen den Stirnflächen 7, 8 von Laufradnabe 3 und Läuferwelle 4 und zwischen Verschlussstopfen 6 und Laufradnabe 3 sowie Läuferwelle 4 ausgebildet. Das heißt mit anderen Worten, die Lötverbindung erstreckt sich in einem Lötspalt 9 zwischen den sich gegenüberliegenden Stirnflächen 7, 8 der Laufradnabe 3 und der ebenen Stirnfläche 7, gebildet durch das Läuferwellenende 4a zusammen mit dem Verschlussstopfen 6, sowie zwischen der Außenmantelfläche 6a des zylinderförmigen Verschlussstopfens 6 und dem gegenüberliegenden Innenwandbereich der Sacklochbohrung 5a. Die axiale Erstreckung des Verschlussstopfens 6 ist kleiner als die axiale Erstreckung der Sacklochbohrung 5a, so dass ein Hohlraum im Läuferwellenende 4a ausgebildet ist, der den wärmeleitenden Querschnitt der Läuferwelle 4 in diesem Bereich verringert und so als Wärmedrossel wirkt. Um sicher zu stellen, dass in den Lötspalt 9 zwischen der Außenmantelfläche 6a des zylinderförmigen Verschlussstopfens 6 und dem gegenüberliegenden Innenwandbereich der Sacklochbohrung 5a Lot zur Ausbildung einer Lötverbindung eindringen kann, kann die Außenmantelfläche 6a des Verschlussstopfens 6 riefen-, nut- oder rändelförmige Vertiefungen mit zumindest anteilmäßig axialem Verlauf (in Richtung der Turbinenläufer-Drehachse 100) aufweisen. Dies entspricht einer Profilierung der Außenmantelfläche 6a des Verschlussstopfens 6, wobei das Profil einen mehr oder weniger großen Negativanteil mit bestimmter Tiefe aufweist, wodurch ein Lötspalt 9 mit entsprechend definierter Spaltbreite, vorzugsweise 0,05 bis 0,15 mm, ausgebildet ist, in den während des Lötprozesses Lot aufgrund von Kapillarwirkung eindringt. Um dies zu gewährleisten ist die Profilierung zumindest anteilmäßig axial ausgerichtet, das heißt der jeweilige "Profil-Spalt" hat einen Verlauf mit einer Komponente in Richtung der Turbinenläufer-Drehachse 100.

Figur 2 zeigt eine andere Ausführung des Turbinenläufers 1, die sich von der in Figur 1 gezeigten Variante dadurch unterscheidet, dass sowohl die Laufradnabe 3 als auch das Läuferwellenende 4a je eine zentrisch angeordnete Ausnehmung in Form von Sacklochbohrungen 5a, 5b aufweisen und ein gemeinsamer Verschlussstopfen 6 derart angeordnet ist, dass er in beide Sacklochbohrungen 5a, 5b hineinragt und beide Sacklochbohrungen 5a, 5b zur jeweiligen Stirnfläche 7, 8 hin abschließt. Die Lötverbindung ist auch hier zwischen den Stirnflächen 7, 8 von Laufradnabe 3 und Läuferwellenende 4a und zwischen Verschlussstopfen 6 und Laufradnabe 3 sowie Läuferwellenende 4a ausgebildet. Das heißt jedoch in diesem Fall, die Lötverbindung erstreckt sich in einem Lötspalt 9 zwischen den sich gegenüberliegenden Stirnflächen 7, 8 der Laufradnabe 3 und des Läuferwellenendes 4a, sowie zwischen der Außenmantelfläche 6a des zylinderförmigen Verschlussstopfens 6 und dem jeweils gegenüberliegenden Innenwandbereich der Sacklochbohrungen 5a, 5b in Laufradnabe 3 und Läuferwellenende 4a. Der wärmedrosselnde Bereich ist dadurch erheblich vergrößert.

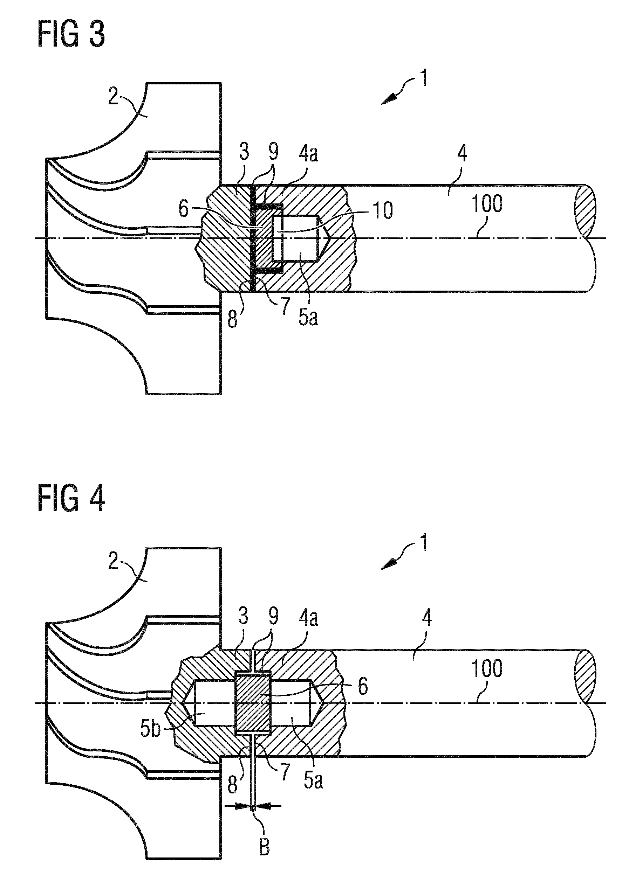

Figur 3 zeigt eine weitere Ausführung des Turbinenläufers 1, die sich von der in Figur 1 gezeigten Variante dadurch unterscheidet, dass der Verschlussstopfen 6 auf der dem durch die Sacklochbohrung 5a gebildeten Hohlraum zugewandten Seite seinerseits eine Ausnehmung 10 aufweist, wodurch der jeweilige Hohlraum vergrößert ist und dass die Sacklochbohrung 5a einen Absatz aufweist, der diese zur Stirnfläche 7 des Läuferwellendes 4a hin erweitert und der als Anschlag für den jeweiligen Verschlussstopfen 6 dient.
In anderen Worten weist die Sacklochbohrung 5a, ausgehend von der Stirnfläche 7 des Läuferwellenendes 4a, in Richtung der Turbinenläufer-Drehachse 100, bis in eine bestimmte Tiefe einen bestimmten (größeren) Durchmesser auf. In dieser bestimmten Tiefe weist die Innenwand der Sacklochbohrung 5a einen rechtwinkligen Absatz auf, von dem aus sich die Sacklochbohrung 5a mit kleinerem Durchmesser weiter entlang der Turbinenläufer-Drehachse 100 bis in eine bestimmte Gesamttiefe der Sacklochbohrung 5a erstreckt.
Der Verschlussstopfen 6 weist einen Durchmesser auf, der dem größeren Durchmesser der Sacklochbohrung 5a im Wesentlichen entspricht und ist so weit in die Sacklochbohrung eingefügt, dass er auf dem in der Sacklochbohrung 5a ausgebildeten Absatz anschlägt oder aufsitzt. Dabei entspricht die axiale Länge des Verschlussstopfens 6 der Tiefe der Sacklochbohrung 5a bis zum Anschlag-Absatz, so dass die Stirnfläche des Verschlussstopfens 6 eine ebene Fläche mit der Stirnfläche 7 des Läuferwellenendes 4a ausbildet.

Figur 4 zeigt eine weitere Ausführung des Turbinenläufers 1, die sich von der in Figur 2 gezeigten Variante dadurch unterscheidet, dass die Sacklochbohrungen 5a, 5b jeweils einen Absatz mit einer bestimmten axialen Erstreckung aufweisen, der die jeweilige Sacklochbohrung 5a, 5b zur jeweiligen Stirnfläche 7, 8 hin erweitert und der als Anschlag für den Verschlussstopfen 6 dient, wie auch zu Figur 3 beschrieben. Diese Ausführung stellt also eine Kombination der Merkmale aus Figur 2 und Figur 3 dar. Dabei ist der gemeinsame Verschlussstopfen 6, der eine bestimmte axiale Erstreckung aufweist, derart angeordnet, dass er in beiden Sacklochbohrungen 5a, 5b auf dem jeweiligen Absatz anschlägt oder aufsitzt. Weiterhin ist die axiale Erstreckung der Absätze, also die Tiefe der Sacklochbohrungen 5a, 5b ausgehend von der jeweiligen Stirnfläche 7, 8 in Richtung der Turbinenläufer-Drehachse 100 bis zum Absatz, und die axiale Erstreckung des Verschlussstopfens 6 im Verhältnis so dimensioniert, dass zwischen den Stirnflächen 7, 8 von Laufradnabe 3 und Läuferwelle 4 ein Lötspalt 9 mit definierter Spaltbreite B ausgebildet ist. Dieser ist in Figur 4 zur besseren Kenntlichmachung ohne Lot im Lötspalt dargestellt. Die so vorzugsweise einzustellende optimale Lötspaltbreite B liegt zwischen 0,05 mm und 0,15 mm.

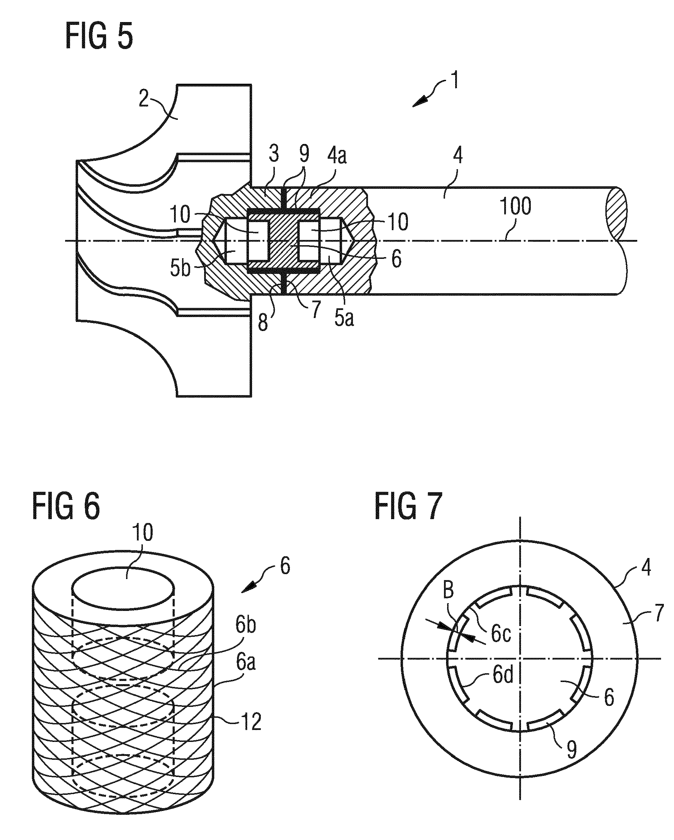

Figur 5 zeigt eine weitere Ausführung des Turbinenläufers 1, die der in Figur 4 gezeigten Variante weitgehend entspricht, sich jedoch dadurch unterscheidet, dass der Verschlussstopfen 6 beidseitig, in den dem jeweiligen Hohlraum zugewandten Seiten, Ausnehmungen 10 aufweist, die den jeweiligen Hohlraum vergrößern und somit die wärmedrosselnde Wirkung weiter verstärken, ohne dadurch die Verbindungsfläche der Lötverbindung zu verkleinern.

Figur 6 zeigt in stark vergrößerter Darstellung einen Verschlussstopfen 6 wie er bei der Ausführung des Turbinenläufers 1 gemäß Figur 5 zum Einsatz kommt. Der Verschlussstopfen 6 hat eine zylinderförmige Grundform und weist auf beiden Stirnseiten eine Ausnehmung 10 auf. Die Außenmantelfläche 6a des Verschlussstopfens 6 weist eine Rändelung 6b in Form einer gegenläufigen Diagonalrändelung auf. Die Rändelrillen verlaufen dabei ca. im 45° Winkel zur Längsachse des Verschlussstopfens 6 oder zur Turbinenläufer-Drehachse 100 und weisen somit einen anteilmäßig axialen Verlauf auf.
Der Außendurchmesser des Verschlussstopfens 6 ist dabei vorteilhaft so bemessen, dass sich mit der Sacklochbohrung 5a, 5b eine leichte Presspassung ergibt. Auf diese Weise ist ein vorfixierter, zentrierter Sitz des Verschlussstopfens in der jeweiligen Sacklochbohrung 5a, 5b gewährleistet und im Falle der Ausführungen gemäß der Figuren 2, 4 und 5 auch eine zueinander zentrierte Ausrichtung von Turbinenlaufrad 2 und Läuferwelle 4 im Fertigungs-/Montageprozess vor Erstellung der Lötverbindung, unabhängig von einer Aufspannvorrichtung. Andererseits bilden die Vertiefungen (negativer Profilanteil) der Rändelung Kanäle aus, durch die das Lot im Lötprozess zwischen Außenmantelfläche 6a und Innenfläche der Sacklochbohrung 5a, 5b eindringen und eine Lötverbindung ausbilden kann.

Figur 7 zeigt die Stirnfläche 7 eines Läuferwellenendes 4a mit eingefügtem Verschlussstopfen 6 gemäß der in Figur 1 gezeigten Ausführung des Turbinenläufers in Draufsicht. Hier ist ein Verschlussstopfen mit einer groberen Profilierung in Form von Längsnuten, die auf der Außenmantelfläche in Richtung der Turbinenläufer-Drehachse 100 verlaufen (also 100% in axialer Richtung), eingesetzt. Dabei sind in gleichmäßiger Verteilung über den Umfang der Außenmantelfläche 6a Vertiefungen 6d (Negativanteil des Profils) und Stege 6c angeordnet. Die Vertiefungen 6d bilden dabei Lötspalte mit einer ihrer Tiefe entsprechenden Lötspaltbreite B. Die so einzustellende optimale Lötspaltbreite B liegt auch hier zwischen 0,05 mm und 0,15 mm. Je größer dabei der Negativanteil, also die Ausdehnung der Vertiefungen über die Außenmantelfläche 6a, desto größer ist die Verbindungsfläche der Lötverbindung.

Die in den Figuren 6 und 7 gezeigten Ausführungen der Profilierung des Verschlussstopfens 6 sowie auch die genannte Dimensionierung des Durchmessers zur Ausbildung einer Presspassung lassen sich selbstverständlich auch auf die anderen, in den Figuren 1 bis 5 gezeigten Ausführungen des Verschlussstopfens 6 übertragen. Auch sind die dargestellten Varianten der Profilierung, also der Anordnung von Vertiefungen auf der Außenmantelfläche des Verschlussstopfens nicht erschöpfend dargestellt. Prinzipiell kann jede Art von Profilierung, die zumindest anteilmäßig in axialer Richtung verläuft und ein Eindringen von Lot im Lötprozess gewährleistet, zur Anwendung kommen.

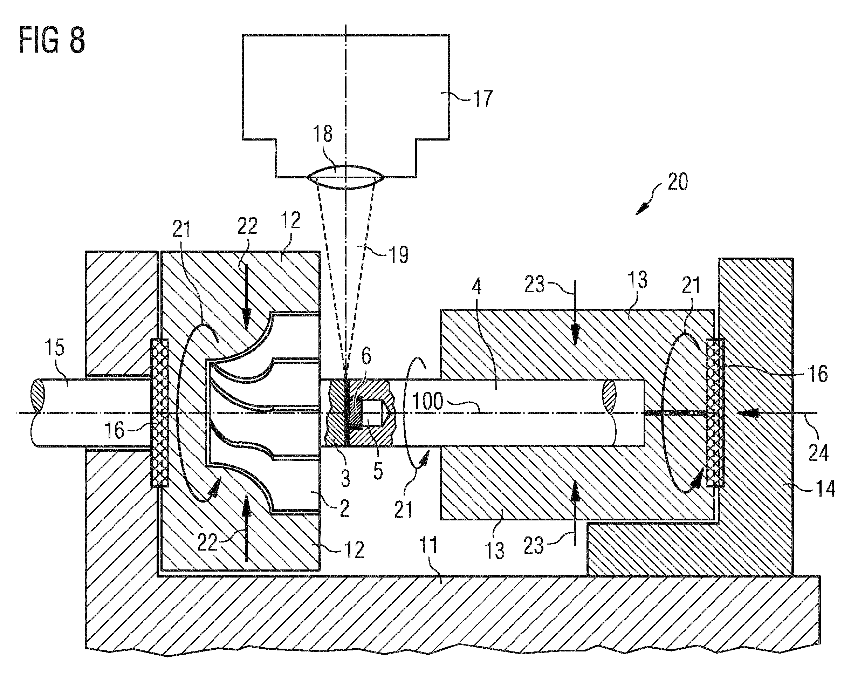

Figur 8 zeigt in stark vereinfachter Darstellung eine Vorrichtung zur Durchführung verschiedener Verfahrensschritte des erfindungsgemäßen Verfahrens. Die dargestellte Vorrichtung dient insbesondere zur Durchführung des Lötprozeßes zur stoffschlüssigen Verbindung zwischen Laufradnabe 3 und Läuferwelle 4. Nach separater Durchführung der ersten Verfahrensschritte:
- Bereitstellen von Turbinenlaufrad, Läuferwelle und Verschlussstopfen,
- Herstellen je einer zentrisch angeordnete Ausnehmung in einer der Stirnflächen der Laufradnabe oder/und der Läuferwelle und
- Einfügen des Verschlussstopfens in zumindest eine der Ausnehmungen des Läuferwellenendes oder/und der Laufradnabe
- Aufbringen eines Lotmaterials auf einer der Stirnflächen, erfolgen zumindest die folgenden Verfahrensschritte unter Verwendung einer Vorrichtung wie zum Beispiel in Figur 8 dargestellt.
Die Vorrichtung weist eine Aufspannvorrichtung 20 und eine Elektronenstrahlquelle 17 mit Fokusiereinrichtung 18 auf. Die Aufspannvorrichtung 20 weist die folgend genannten Funktionseinheiten auf:
- Ein Vorrichtungsbett 11 als Basis für die weiteren Funktionseinheiten.
- Ein Laufradspannfutter 12 bestehend aus zumindest zwei Spannbacken zur zentrierten Aufnahme des Turbinenlaufrades 2, wobei das Laufradspannfutter 12 mittels eines Rotationslagers 16 drehbar um die Turbinenläufer-Drehachse 10 am Vorrichtungsbett 11 gelagert und über eine Antriebswelle 15 antreibbar ist.
- Einen Spannschlitten 14, der im Vorrichtungsbett 11 axial, in Richtung der Turbinenläufer-Drehachse 10 verfahrbar gelagert ist.
- Ein Läuferwellenspannfutter 13 bestehend aus zumindest zwei Spannbacken zur zentrierten Aufnahme der Läuferwelle 4, welches mittels eines Rotationslagers 16 drehbar um die Turbineläufer-Drehachse 10 am Spannschlitten 14 gelagert ist.
Das bereitgestellte, entsprechend den ersten Verfahrensschritten vorbereitete Turbinenlaufrad 2 wird im Laufradspannfutter 12 zentriert aufgespannt, die Pfeile 22 zeigen die dazu erforderliche Spannbewegung der einzelnen Spannbacken. Ebenfalls wird die bereitgestellte, entsprechend den ersten Verfahrensschritten vorbereitete Läuferwelle im Läuferwellenspannfutter 13 zentriert aufgespannt, die Pfeile 23 zeigen die dazu erforderliche Spannbewegung der einzelnen Spannbacken. Dann erfolgt über eine lineare Bewegung des Spannschlittens 14, die in der Figur 8 mittels des Pfeils 24 angedeutet ist, das zentriert zueinander ausgerichtete Zusammenführen von Turbinenlaufrad 2 und Läuferwelle 4, derart, dass die jeweilige stirnseitige Anlagefläche unmittelbar an der gegenüberliegenden stirnseitigen Anlagefläche des jeweils anderen Werkstückes anliegt und das Lotmaterial im Lötspalt 9 positioniert ist. Gegebenenfalls erfolgt hier auch das Einfügen eines gemeinsamen Verschlussstopfens 6 in die gegenüberliegende Sacklochbohrung 5a, 5b des gegenüberliegend positionierten Werkstückes. Der Spannschlitten 14 bringt dann eine vordefinierte Spannkraft auf, mit der die beiden Werkstücke gegeneinander gedrückt werden. In der Folge wird nun, angetrieben über die Antriebswelle 15, das Turbinenlaufrad 2 zusammen mit der mittels Kraftschluss daran gekoppelten Läuferwelle 4 in Rotation mit vorgegebener, geregelter Drehzahl um die Turbinenläufer-Drehachse 100 versetzt, dies ist in der Figur 8 mit den Pfeilen 21 angedeutet. Mit Hilfe der Elektronenstrahlquelle 17 und der Fokusiereinrichtung 18 wird nun ein Elektronenstrahl 19 erzeugt und von außen auf den Lötspalt 9 gerichtet. Durch die gleichmäßige Drehung des Turbinenläufers 1 in Zusammenwirken mit dem Elektronenstrahl 19 erfolgt nun die Erwärmung des Lotmaterials und des unmittelbaren Stirnflächenbereichs 7, 8 von Laufradnabe 3 und Läuferwelle 4 im Lötspalt 9, bis auf eine vorbestimmte, über der Schmelztemperatur des Lotmaterials liegende Löttemperatur. Dabei kann durch die Drehzahl des Turbinenläufers 1 und die Intensität des Elektronenstrahls 19 Einfluss genommen werden auf die Erwärmungsgeschwindigkeit und das zu erreichende Temperaturniveau. Um eine gute Benetzung der sich gegenüberliegenden Stirnflächen 7, 8 durch das Lot zu gewährleisten erfolgt nun ein Halten der Löttemperatur über eine vorbestimmte Zeit, mittels geregelter Energiezufuhr durch den Elektronenstrahl 19, bei gleichbleibender Drehgeschwindigkeit des Turbinenläufers 1. Im Anschluss daran erfolgt dann das Abkühlen der Werkstücke und das damit verbundene Erzeugen der Lötverbindung zwischen Turbinenlaufrad 2 und Läuferwelle 4. Dabei wird die vom Spannschlitten 14 erzeugte Spannkraft zumindest so lange aufrecht gehalten, bis das Lot erstarrt und die Verbindung stabil ist. Erst dann erfolgt die Freigabe des Turbinenläufers aus der Vorrichtung.

Sämtliche beschriebenen Abläufe können dabei automatisiert mit Hilfe entsprechender Antriebsvorrichtungen und einer zentralen programmierbaren Steuer-/Regel-Einrichtung durchgeführt werden. Durch die Anordnung weiterer Funktionseinheiten können auch die vorgelagerten Verfahrensschritte, wie zum Beispiel das Herstellen der konzentrisch angeordneten Sacklochbohrungen, das Einfügen des Verschlussstopfens und das Aufbringen eines Lotmaterials, zumindest teilweise in der beschriebenen Vorrichtung durchgeführt werden.

## Patentansprüche

1. Turbinenläufer (1) für eine Abgasturbine, die ein Turbinenlaufrad (2) mit einer Laufradnabe (3), bestehend aus einer hochwarmfesten Metalllegierung und eine Läuferwelle (4) mit einem der Laufradbasis zugewandten Läuferwellenende (4a), bestehend aus Stahl, aufweist, wobei die Laufradnabe (3) und das Läuferwellenende (4a) mittels einer Lötverbindung stoffschlüssig mit einander verbunden sind, wobei das Läuferwellenende (4a) oder/und die Laufradnabe (3) eine zentrisch angeordnete Ausnehmung (5a/5b) aufweist, die im Übergang zwischen Turbinenlaufrad (2) und Läuferwelle (4) als Wärmedrossel wirkt, wobei in der jeweiligen Ausnehmung (5a/5b) ein Verschlussstopfen (6) derart angeordnet ist, dass er mit der Ausnehmung (5a/5b) einen geschlossenen Hohlraum bildet und die Ausnehmung (5a/5b) zur jeweiligen Stirnfläche (7/8) hin abschließt, wobei die Lötverbindung zwischen den Stirnflächen (7/8) von Laufradnabe (3) und Läuferwelle (4) ausgebildet ist, **dadurch gekennzeichnet, dass** die Lötverbindung auch zwischen Verschlussstopfen (6) und Laufradnabe (3) sowie Läuferwelle (4) ausgebildet ist.

2. Turbinenläufer (1) nach Anspruch 1, **dadurch gekennzeichnet, dass** die hochwarmfeste Metalllegierung des Turbinenlaufrads (2) eine TiAl-Legierung oder eine Ni-Basislegierung ist und dass der Stahl der Läuferwelle (4) ein niedriglegierter oder hochlegierter Vergütungsstahl oder ein austenitischer Stahl ist.

3. Turbinenläufer (1) nach Anspruch 1, **dadurch gekennzeichnet, dass** die Lötverbindung mittels Elektronenstrahl-Lötverfahren erzeugt wurde.

4. Turbinenläufer (1) nach Anspruch 1, **dadurch gekennzeichnet, dass** der Verschlussstopfen (6) auf zumindest einer dem jeweiligen Hohlraum zugewandten Seite eine Ausnehmung (10) aufweist, wodurch der jeweilige Hohlraum vergrößert ist.

5. Turbinenläufer (1) nach Anspruch 1, **dadurch gekennzeichnet, dass** der Verschlussstopfen (6) zylinderförmig ausgebildet ist und auf seiner Außenmantelfläche (6a) riefen-, nut- oder rändelförmige Vertiefungen mit zumindest anteilmäßig axialem Verlauf aufweist.

6. Turbinenläufer (1) nach Anspruch 1, **dadurch gekennzeichnet, dass** die jeweilige zentrisch angeordnete Ausnehmung (5a/5b) im Läuferwellenende (4a) oder/und in der Laufradnabe (3) als Sacklochbohrung ausgebildet ist.

7. Turbinenläufer (1) nach Anspruch 6, **dadurch gekennzeichnet, dass** die jeweilige Sacklochbohrung einen Absatz aufweist, der diese zur jeweiligen Stirnfläche (7/8) hin erweitert und der als Anschlag für den jeweiligen Verschlussstopfen (6) wirkt.

8. Turbinenläufer (1) nach zumindest einem der Ansprüche 1 bis 7, **dadurch gekennzeichnet, dass** der Verschlussstopfen (6) derart in der jeweiligen Ausnehmung (5a/5b) angeordnet ist, dass er mit der jeweiligen Stirnseite eine ebene Fläche bildet.

9. Turbinenläufer (1) nach zumindest einem der Ansprüche 1 bis 7, **dadurch gekennzeichnet, dass** sowohl die Laufradnabe (3) als auch das Läuferwellenende (4a) eine zentrisch angeordnete Ausnehmung (5a/5b) aufweisen und ein gemeinsamer Verschlussstopfen (6) derart angeordnet ist, dass er in beide Ausnehmungen (5a/5b) hineinragt und beide Ausnehmungen (5a/5b) zur jeweiligen Stirnfläche (7/8) hin abschließt.

10. Turbinenläufer (1) nach zumindest einem der Ansprüche 1 bis 5, **dadurch gekennzeichnet, dass** sowohl die Laufradnabe (3) als auch das Läuferwellenende (4a) eine zentrisch angeordnete Ausnehmung (5a/5b) in Form einer Sacklochbohrung aufweisen und dass diese einen Absatz mit einer bestimmten axialen Erstreckung aufweist, der die jeweilige Sacklochbohrung zur jeweiligen Stirnfläche (7/8) hin erweitert und der als Anschlag für den Verschlussstopfen (6) wirkt,
wobei ein gemeinsamer Verschlussstopfen (6) mit einer bestimmten axialen Erstreckung derart angeordnet ist, dass er in beiden Ausnehmungen (5a/5b) auf dem jeweiligen Absatz anschlägt und die axialen Erstreckungen der Absätze und des Verschlussstopfens (6) im Verhältnis so dimensioniert sind, dass zwischen den Stirnflächen (7/8) von Laufradnabe (3) und Läuferwelle (4) ein Lötspalt (9) mit definierter Spaltbreite (B) ausgebildet ist.

11. Verfahren zur Herstellung eines Turbineläufers (1) nach Anspruch 1, **gekennzeichnet durch** die folgenden Verfahrensschritte:
- Bereitstellen eines Turbinenlaufrades (2) aus einer hochwarmfesten Metalllegierung mit einer Laufradnabe (3), einer Läuferwelle (4) aus Stahl und eines Verschlussstopfens (6),
- Einbringen einer zentrisch angeordneten Ausnehmung (5a/5b) in das Läuferwellenende (4a) oder/und die Laufradnabe (3),
- Einfügen des Verschlussstopfens (6) in die Ausnehmung (5a/5b) des Läuferwellenendes (4a) oder der Laufradnabe (3),
- Aufbringen eines Lotmaterials auf eine der Stirnflächen (7/8) der Laufradnabe (3) oder der Läuferwelle (4),
- Zusammenführen und zentriertes Ausrichten von Turbinenlaufrad (2) und Läuferwelle (4) **durch** Aufspannen der Werkstücke in einer dafür eingerichteten Vorrichtung, derart, dass die Stirnflächen (7/8) von Laufradnabe (3) und Läuferwelle (4) sich unmittelbar gegenüberliegen und das Lotmaterial im Lötspalt (9) dazwischen positioniert ist,
- Erwärmung des Lotmaterials und des unmittelbaren Stirnflächenbereichs von Laufradnabe (3) und Läuferwelle (4) im Lötspalt (9) mit Hilfe eines Elektronenstrahls (19), bis auf eine vorbestimmte, über der Schmelztemperatur des Lotmaterials liegende Löttemperatur,
- Halten der Löttemperatur über eine vorbestimmte Zeit, mittels geregelter Energiezufuhr **durch** den Elektronenstrahl (19),
- Abkühlen der Werkstücke und damit verbundenes Erzeugen der Lötverbindung zwischen den Stirnflächen (7/8) von Laufradnabe (3) und Läuferwelle (4) und zwischen Verschlussstopfen (6) und Laufradnabe (3) sowie Läuferwelle (4)
- Freigabe des Turbinenläufers (1) aus der Vorrichtung (20).

12. Verfahren zur Herstellung eines Turbineläufers (1) nach Anspruch 10, **gekennzeichnet durch** den zusätzlichen Verfahrensschritt:
- Im Anschluss an das Einfügen des Verschlussstopfens (6), Auftragen eines Flußmittels auf die beiden zu verbindenden Stirnflächen (7/8) von Laufradnabe (3) und Läuferwelle (4) und den Verschlossstopfen (6).

## Claims

1. Turbine rotor (1) for an exhaust gas turbine, which has a turbine rotor wheel (2) with a rotor wheel hub (3), consisting of a highly heat-resistant metal alloy, and a rotor shaft (4) with a rotor shaft end (4a) facing the rotor wheel base, consisting of steel, the rotor wheel hub (3) and the rotor shaft end (4a) being connected to one another in a material-bonded manner by means of a brazed connection, the rotor shaft end (4a) and/or the rotor wheel hub (3) having a centrally arranged recess (5a/5b), which acts as a thermal choke at the transition between the turbine rotor wheel (2) and the rotor shaft (4),
wherein a closure plug (6) is arranged in the respective recess (5a/5b) in such a way that it forms a closed cavity with the recess (5a/5b) and closes off the recess (5a/5b) toward the respective end face (7/8), the brazed connection being formed between the end faces (7/8) of the rotor wheel hub (3) and the rotor shaft (4), **characterized in that** the brazed connection is also formed between the closure plug (6) and the rotor wheel hub (3) and the rotor shaft (4).

2. Turbine rotor (1) according to Claim 1, **characterized in that** the highly heat-resistant metal alloy of the turbine rotor wheel (2) is a TiAl alloy or an Ni-based alloy and **in that** the steel of the rotor shaft (4) is a low-alloy or high-alloy heat-treatment steel or an austenitic steel.

3. Turbine rotor (1) according to Claim 1, **characterized in that** the brazed connection has been created by means of electron-beam brazing methods.

4. Turbine rotor (1) according to Claim 1, **characterized in that** the closure plug (6) has a recess (10) on at least one side facing the respective cavity, whereby the respective cavity is increased.

5. Turbine rotor (1) according to Claim 1, **characterized in that** the closure plug (6) is cylindrically formed and has on its outer lateral surface (6a) depressions in the form of grooves, slots or knurls, with at least in some proportion an axial extent.

6. Turbine rotor (1) according to Claim 1, **characterized in that** the respective centrally arranged recess (5a/5b) in the rotor shaft end (4a) and/or in the rotor wheel hub (3) is formed as a blind-hole bore.

7. Turbine rotor (1) according to Claim 6, **characterized in that** the respective blind-hole bore has an offset, which widens the latter toward the respective end face (7/8) and acts as a stop for the respective closure plug (6).

8. Turbine rotor (1) according to at least one of Claims 1 to 7, **characterized in that** the closure plug (6) is arranged in the respective recess (5a/5b) in such a way that it forms a planar surface with the respective end face.

9. Turbine rotor (1) according to at least one of Claims 1 to 7, **characterized in that** both the rotor wheel hub (3) and the rotor shaft end (4a) have a centrally arranged recess (5a/5b), and a common closure plug (6) is arranged in such a way that it protrudes into the two recesses (5a/5b) and closes off both recesses (5a/5b) toward the respective end face (7/8).

10. Turbine rotor (1) according to at least one of Claims 1 to 5, **characterized in that** both the rotor wheel hub (3) and the rotor shaft end (4a) have a centrally arranged recess (5a/5b) in the form of a blind-hole bore and **in that** the latter has an offset with a certain axial extent, which widens the respective blind-hole bore toward the respective end face (7/8) and acts as a stop for the closure plug (6), a common closure plug (6) with a certain axial extent being arranged in such a way that in both recesses (5a/5b) it stops against the respective offset and the axial extents of the offsets and of the closure plug (6) being dimensioned in such a relationship that a brazing gap (9) with a defined gap width (B) is formed between the end faces (7/8) of the rotor wheel hub (3) and the rotor shaft (4).

11. Method for producing a turbine rotor (1) according to Claim 1, **characterized by** the following method steps:
- providing a turbine rotor wheel (2) of a highly heat-resistant metal alloy with a rotor wheel hub (3), a rotor shaft (4) of steel and a closure plug (6),
- introducing a centrally arranged recess (5a/5b) into the rotor shaft end (4a) and/or the rotor wheel hub (3),
- inserting the closure plug (6) into the recess (5a/5b) of the rotor shaft end (4a) or the rotor wheel hub (3),
- applying a brazing material to one of the end faces (7/8) of the rotor wheel hub (3) or the rotor shaft (4),
- bringing together and aligning in a centered manner the turbine rotor wheel (2) and the rotor shaft (4) by clamping the workpieces in a device set up for this purpose in such a way that the end faces (7/8) of the rotor wheel hub (3) and the rotor shaft (4) lie directly opposite one another and the brazing material is positioned in the brazing gap (9) in between them,
- heating up the brazing material and the direct end face region of the rotor wheel hub (3) and the rotor shaft (4) in the brazing gap (9) with the aid of an electron beam (19), up to a predetermined brazing temperature lying above the melting temperature of the brazing material,
- maintaining the brazing temperature over a predetermined time, by means of a controlled supply of energy by the electron beam (19),
- cooling down the workpieces, with the associated effect of creating the brazed connection between the end faces (7/8) of the rotor wheel hub (3) and the rotor shaft (4) and between the closure plug (6) and the rotor wheel hub (3) and the rotor shaft (4),
- releasing the turbine rotor (1) from the device (20).

12. Method for producing a turbine rotor (1) according to Claim 10, **characterized by** the additional method step:
- after inserting the closure plug (6), applying a flux to the two end faces (7/8) to be connected, of the rotor wheel hub (3) and the rotor shaft (4), and the closure plug (6).

## Revendications

1. Rotor de turbine (1) pour une turbine à gaz d'échappement, qui présente une roue mobile de turbine (2) avec un moyeu de roue mobile (3), se composant d'un alliage métallique superréfractaire et un arbre de rotor (4) avec une extrémité d'arbre de rotor (4a) tournée vers la base de la roue mobile, se composant d'acier, dans lequel le moyeu de roue mobile (3) et l'extrémité d'arbre de rotor (4a) sont assemblés l'un à l'autre en continuité de matière par un assemblage brasé, dans lequel l'extrémité d'arbre de rotor (4a) et/ou le moyeu de rotor (3) présente un évidement disposé au centre (5a/5b), qui agit comme étranglement thermique dans le passage entre la roue mobile de turbine (2) et l'arbre de rotor (4), dans lequel un bouchon de fermeture (6) est disposé dans l'évidement respectif (5a/5b), de telle manière qu'il forme avec l'évidement (5a/5b) une cavité fermée et qu'il ferme l'évidement (5a/5b) en direction de la face frontale respective (7/8), dans lequel l'assemblage brasé est formé entre les faces frontales (7/8) du moyeu de roue mobile (3) et de l'arbre de rotor (4), **caractérisé en ce que** l'assemblage brasé est formé également entre le bouchon de fermeture (6) et le moyeu de roue mobile (3) ainsi que l'arbre de rotor (4).

2. Rotor de turbine (1) selon la revendication 1, **caractérisé en ce que** l'alliage métallique superréfractaire de la roue mobile de turbine (2) est un alliage Ti-Al ou un alliage à base de nickel et **en ce que** l'acier de l'arbre de rotor (4) est un acier faiblement allié ou un acier de traitement fortement allié ou un acier austénitique.

3. Rotor de turbine (1) selon la revendication 1, **caractérisé en ce que** l'assemblage brasé a été produit par un procédé de brasage par faisceau d'électrons.

4. Rotor de turbine (1) selon la revendication 1, **caractérisé en ce que** le bouchon de fermeture (6) présente sur au moins un côté tourné vers la cavité respective un évidement (10), par lequel la cavité respective est agrandie.

5. Rotor de turbine (1) selon la revendication 1, **caractérisé en ce que** le bouchon de fermeture (6) est de forme cylindrique et présente sur sa surface latérale extérieure (6a) des creux en forme de cannelures, de rainures ou de moletage avec un tracé axial au moins en proportion.

6. Rotor de turbine (1) selon la revendication 1, **caractérisé en ce que** l'évidement respectif disposé au centre (5a/5b) dans l'extrémité d'arbre de rotor (4a) et/ou dans le moyeu de roue mobile (3) est réalisé en forme de trou borgne.

7. Rotor de turbine (1) selon la revendication 6, **caractérisé en ce que** le trou borgne respectif présente un épaulement, qui élargit ce dernier en direction de la face frontale respective (7/8) et qui agit comme butée pour le bouchon de fermeture respectif (6).

8. Rotor de turbine (1) selon au moins une des revendications 1 à 7, **caractérisé en ce que** le bouchon de fermeture (6) est disposé dans l'évidement respectif (5a/5b), de telle manière qu'il forme avec le côté frontal respectif une face plane.

9. Rotor de turbine (1) selon au moins une des revendications 1 à 7, **caractérisé en ce qu'**aussi bien le moyeu de roue mobile (3) que l'extrémité d'arbre de rotor (4a) présentent un évidement disposé au centre (5a/5b) et un bouchon de fermeture commun (6) est disposé de telle manière qu'il pénètre dans les deux évidements (5a/5b) et qu'il ferme les deux évidements (5a/5b) en direction de la face frontale respective (7/8).

10. Rotor de turbine (1) selon au moins une des revendications 1 à 5, **caractérisé en ce qu'**aussi bien le moyeu de roue mobile (3) que l'extrémité d'arbre de rotor (4a) présentent un évidement disposé au centre (5a/5b) sous forme de trou borgne et **en ce que** celui-ci présente un épaulement ayant une extension axiale déterminée, qui élargit le trou borgne respectif en direction de la face frontale respective (7/8) et qui agit comme butée pour le bouchon de fermeture (6), dans lequel un bouchon de fermeture commun (6) avec une extension axiale déterminée est disposé de telle manière qu'il bute contre l'épaulement respectif dans les deux évidements (5a/5b) et les extensions axiales des épaulements et du bouchon de fermeture (6) sont dimensionnées dans un rapport tel qu'une fente de brasage (9) avec une largeur de fente définie (B) soit formée entre les faces frontales (7/8) du moyeu de roue mobile (3) et de l'arbre de rotor (4).

11. Procédé de fabrication d'un rotor de turbine (1) selon la revendication 1, **caractérisé par** les étapes de procédé suivantes:
- préparation d'une roue mobile de turbine (2) en un alliage métallique superréfractaire avec un moyeu de roue mobile (3), d'un arbre de rotor (4) en acier et d'un bouchon de fermeture (6),
- réalisation d'un évidement disposé au centre (5a/5b) dans l'extrémité d'arbre de rotor (4a) et/ou le moyeu de roue mobile (3),
- insertion du bouchon de fermeture (6) dans l'évidement (5a/5b) de l'extrémité d'arbre de rotor (4a) ou du moyeu de roue mobile (3),
- application d'un matériau de brasure sur une de faces frontales (7/8) du moyeu de roue mobile (3) ou de l'arbre de rotor (4),
- assemblage et alignement centré de la roue mobile de turbine (2) et de l'arbre de rotor (4) par serrage des pièces dans un dispositif conçu à cet effet, de telle manière que les faces frontales (7/8) du moyeu de roue mobile (3) et de l'arbre de rotor (4) se fassent directement face et que le matériau de brasage soit positionné dans la fente de brasage (9) entre elles,
- chauffage du matériau de brasage et de la zone directe des faces frontales du moyeu de roue mobile (3) et de l'arbre de rotor (4) dans la fente de brasage (9) au moyen d'un faisceau d'électrons (19), jusqu'à une température de brasage située au-dessus de la température de fusion du matériau de brasage,
- maintien de la température de brasage pendant un temps prédéterminé, au moyen d'un apport d'énergie régulé par le faisceau d'électrons (19),
- refroidissement de la pièce et production simultanée de l'assemblage brasé entre les faces frontales (7/8) du moyeu de roue mobile (3) et de l'arbre de rotor (4) et entre le bouchon de fermeture (6) du moyeu de roue mobile (3) ainsi que l'arbre de rotor (4),
- enlèvement du rotor de turbine (1) hors du dispositif (20).

12. Procédé de fabrication d'un rotor de turbine (1) selon la revendication 10, **caractérisé par** l'étape de procédé supplémentaire suivante:
- à la suite de l'insertion du bouchon de fermeture (6), dépôt d'un fondant sur les deux faces frontales à assembler (7/8) du moyeu de roue mobile (3) et de l'arbre de rotor (4) et sur le bouchon de fermeture (6).
